# EUROPEAN PATENT APPLICATION

(11) **EP 4 477 053 A1**
(43) Date of publication of application: **18.12.2024**
(21) Application number: 24179332.2
(22) Date of filing: 31.05.2024
(51) Int. Cl.: A01G 3/053, A01G 3/06, A01G 3/08, A01G 20/47, B27B 17/00

(54) **MACHINE FOR MAINTENANCE OF EXTERNAL AREAS**

(30) Priority: 15.06.2023 IT 202300012387
(71) Applicant: Stiga S.p.A., 31033 Castelfranco Veneto (TV) (IT)
(72) Inventor: RIGONI, Mattia, 31015 Conegliano (TV) (IT); CAMERON, James, 31030 Casier (TV) (IT); TOLOTTO, Daniele, 31040 Chiarano (TV) (IT); MARTONE, Dario, 35138 Padova (PD) (IT); D'AGOSTINI, Mauro, 35018 San Martino di Lupari (PD) (IT); ZANOLIN, Alessandro, 35010 Trebaseleghe (PD) (IT); ZONTA, Paolo, 31033 Castelfranco Veneto (TV) (IT); CALLEGARO, Antonio, 31100 Treviso (IT)
(74) Representative: PGA S.p.A.

(57) **Abstract**

The present disclosure relates to a land or garden maintenance machine comprising a main body (2) carrying a work head (4) with a tool (4a). The machine further has a joint (5) which engages the main body (2) to the work head (4). The joint comprises a selector (6) configurable between an angular locking configuration in which it constrains the work head (4) to the main body (2) and an angular selection configuration in which it is movable inside the joint to firmly retain the work head with respect to said main body (2) until a moment less than or equal to a nominal moment is applied to the joint and to allow an angular movement of the work head with respect to said main body (2).

## Description

### FIELD OF THE INVENTION

The present disclosure relates to a machine for the maintenance of external areas, such as land or gardens, which can carry out grass mowing operations and/or pruning operations of plants, shrubs and hedges. For example, the machine can be usable as a brush cutter, turf trimmer, and/or hedge trimmer.

### STATE OF THE ART

Machines for the maintenance of external areas, such as mowing turfgrass and pruning plants and hedges, are known in the field of gardening and land maintenance. Such machines comprise a main body supporting a handle graspable by an operator for orienting a work tool in the desired position. The known machines also comprise a joint interposed between the main body and the work tool, configurable between a locked position in which it constrains the main body to the work tool, preventing a relative movement thereof, and a release position in which it allows a relative rotation between the work tool and the main body. However, such a joint, when in the release position, is not at all capable of supporting the tool which highlights an uncontrolled rotation (for example due to gravity) with respect to the main body, thus causing difficulty in positioning the tool itself according to the desired orientation if not assisted by a second operator or by resting the device on the ground or on a support. Therefore, although the solution disclosed above envisages a machine for the maintenance of external areas capable of orienting the work tool at will with respect to the main body, the Applicant has found that such a solution highlights limitations and drawbacks, and therefore can be improved in certain respects.

### OBJECT OF THE INVENTION

Therefore, the object of the present disclosure is to solve at least one of the drawbacks and/or limitations of the previous solutions.

A first objective is to provide a machine for the maintenance of external areas in which the work tool is easily orientable in several operating positions, to facilitate the maintenance operations carried out by the machine itself.

It is then the object of the present disclosure to provide a machine for the maintenance of external areas capable of safeguarding the safety of an operator both during the orientation of the tool and during the maintenance operations.

A further object of the present disclosure is to provide a robust and reliable machine for the maintenance of external areas.

A further objective is to provide a machine for the maintenance of external areas having a simple and compact structure capable of minimizing footprints.

These and still other objects, which will appear more clearly from the following description, are substantially achieved by a machine for the maintenance of external areas in accordance with one or more of the appended claims and/or the following aspects.

### SUMMARY

Aspects of the invention are described here below.

In a 1st aspect, a machine is provided for the maintenance of external areas, optionally a machine for cutting the lawn or for shaving or pruning trees or hedges, said machine (1) comprising:
- a main body (2) accommodating a gripping handle (3) for an operator of said machine,
- a work head (4) constrained to said main body (2),
- a tool (4a) carried by said work head (4), and
- a joint (5) interposed between said main body (2) and said work head (4), said joint (5) being configured to allow an engagement of said work head (4) relative to said main body (2) in a plurality of preset angular positions distinct from each other,
in which said joint (5) comprises a selector (6) configured to assume at least the following two operating configurations:
- an angular locking configuration, in which said selector (6) allows said joint (5) to rigidly constrain said work head (4) and said main body (2) in one of the angular positions of said plurality of angular positions, and
- an angular selection configuration, in which said selector (6) is movable inside said joint (5) allowing said joint (5) to:
   ∘ stably retain said work head (4) in a same angular position with respect to said main body (2) until a moment less than or equal to a nominal moment is applied to said joint (5), and
   ∘ allowing an angular movement of said work head (4) with respect to said main body (2) in one of said angular positions upon exceeding said nominal moment.

In a 2nd aspect according to the preceding aspect, the joint (5) is a flat joint defining, in the angular selection configuration, a rotation axis (X) of said work head (4) relative to said main body (2).

In a 3rd aspect according to any one of the preceding aspects, in which said plurality of angular positions are positions offset from each other in a predetermined manner around one/the rotation axis (X) of said work head (4) relative to said main body (2).

In a 4th aspect according to any one of the preceding aspects, the adjacent angular positions of said plurality of angular positions are offset from each other by 22.5°.

In a 5th aspect according to any one of the preceding aspects, the adjacent angular positions of said plurality of angular positions are offset from each other, defining an inclination angle (α) between a main extension direction defined by the main body (2) and a main longitudinal extension direction defined by the tool (4a).

In a 6th aspect according to the preceding aspect, the inclination angle (α) is configured to assume the following values: 90°, 112.5°,135°, 157.5°,180°, 202.5°.

In a 7th aspect according to any one of the preceding aspects, the selector (6), in the angular locking configuration, is locked inside said joint (5).

In an 8th aspect according to any one of the preceding aspects, the plurality of angular positions comprises at least three, optionally at least six, distinct angular positions.

In a 9th aspect according to any one of the preceding aspects, the joint (5), in the angular selection configuration, is configured to allow a rotation of said work head (4) relative to said main body (2) when said moment applied to the joint (5) is greater than said nominal moment.

In a 10th aspect according to any one of the preceding aspects, the joint (5), in the angular selection configuration, is configured to allow a rotation of said work head (4) relative to said main body (2) following a force applied to said work head by an operator of said machine.

In an 11th aspect according to any one of the preceding aspects, the nominal moment is greater than a maximum moment generated in said joint (5) by the weight force of said work head (4) in a machine rest condition in which an operator supports the machine from the main body (2) and said work head is aligned with respect to said main body.

In a 12th aspect according to any one of the preceding aspects, said moment is considered with respect to said/a rotation axis (X) of said work head (4) relative to said main body (2).

In a 13th aspect according to any one of the preceding aspects, the selector (6) has the form of a solid of revolution and has axial symmetry with respect to said/a rotation axis (X) of said work head relative to said main body.

In a 14th aspect according to any one of the preceding aspects, the selector (6) internally comprises a cavity (9c) extending along an entire axial extension of said selector (6), coaxially to said rotation axis (X).

In a 15th aspect according to any one of the preceding aspects, the selector (6) is configured to move axially inside said joint (5) according to an axial movement direction parallel or coincident with said/a rotation axis (X) of said work head (4) relative to said main body (2).

In a 16th aspect according to any one of the preceding aspects, the selector (6) is configured to move axially to and from inside said joint (5) in conjunction with the switching of said joint (5) from the angular locking configuration to the selection configuration and further, when the joint (5) is in said selection configuration, in conjunction with the angular movement of said work head with respect to said main body.

In a 17th aspect according to any one of the preceding aspects, the joint (5) comprises a stop element (7) drivable to move said selector (6) from the angular locking configuration to the angular selection configuration. In an 18th aspect according to the preceding aspect, the selector (6) comprises an abutment portion (8) configured to cooperate with said stop element (7).

In a 19th aspect according to any one of the preceding aspects, the selector (6) comprises a guide portion (9) configured to cooperate with one among the work head (4) and the main body (2), the guide portion also being configured to constrain the movement of said selector (6) inside said joint (5) according to an axial movement direction.

In a 20th aspect according to any one of the preceding aspects, the selector (6) comprises a gear portion (10) cooperating with the other among the work head (4) and the main body (2) and configured for:
- locking, inside said joint (5), said work head (4) to said main body (2) when said joint (5) is in the angular locking configuration,
- stably retaining said work head (4) and said main body (2) in a same relative angular position when said joint (5) is in the selection configuration, simultaneously allowing an angular movement of said work head (4) with respect to said main body (2) in one of said angular positions, respectively depending on whether or not a moment greater than said nominal torque moment is applied to the joint (5).

In a 21st aspect according to any one of the three preceding aspects, the abutment portion (8) has a ring shape. In a 22nd aspect according to the preceding aspect or any one of the four preceding aspects, the abutment portion comprising at least two opposite protrusions (11) separated by at least two cavities (12).

In a 23rd aspect according to any one of the three preceding aspects, the gear portion (10) extends adjacent to said abutment portion (8) extending axially from said abutment portion.

In a 24th aspect according to the 19th and 20th aspect, the guide portion (9) is axially spaced from the gear portion (10) and engages a corresponding guide portion (13) of the main body or of the work head.

In a 25th aspect according to any one of the six preceding aspects, the guide portion (9) of the selector (6) in turn has:
- a respective radially outer part (9a) extending on an outer surface of the guide portion (9), and/or
- a respective radially inner part (9b) delimiting an internal cavity (9c) of the same guide portion of said selector (6).

In a 26th aspect according to any one of the six preceding aspects, the gear portion (10) of said selector (6) cooperates with a respective gear portion (14) obtained in the main body (2) or in said work head (4).

In a 27th aspect according to any one of the preceding aspects from the 19th to the 26th, if the guide portion (9) of the selector (6) engages a guide portion (13) carried by the work head (4), then the gear portion (10) of said selector (6) cooperates with a respective gear portion (14) integral with the main body (2).

In a 28th aspect according to any one of the preceding aspects from the 19th to the 26th, if the guide portion (9) engages a guide portion (13) carried by the main body (2), then the gear portion (10) of said selector (6) cooperates with a respective gear portion (14) integral with the work head (4).

In a 29th aspect according to any one of the two preceding aspects, the gear portion (10) of said selector (6) comprises a plurality of teeth (15) angularly offset from each other cooperating with a plurality of counter-teeth (16) carried by the gear portion (14) carried by the work head (4) or by the main body (2).

In a 30th aspect according to the preceding aspect, the plurality of teeth and/or the plurality of counter-teeth, optionally both said plurality of teeth (15) and said plurality of counter-teeth (16), has a terminally chamfered and/or rounded shape whereby, when the selector (6) is in the angular selection condition, the teeth (15) can move angularly with respect to the counter-teeth (16) allowing the angular movement of said work head (4) with respect to said main body (2) in one of said angular positions upon exceeding said nominal torque moment.

In a 31st aspect according to any one of the preceding aspects from the 19th to the 30th, the guide portion (9) of said selector (6) comprises a plurality of grooves (17) on the respective radially inner part (9b).

In a 32nd aspect according to any one of the preceding aspects from the 19th to the 31st, the guide portion (9) of said selector (6) comprises a plurality of teeth (18) on the respective radially outer part (9a).

In a 33rd aspect according to any one of the preceding aspects from the 19th to the 32nd, the guide portion (9) of said selector (6) is configured to cooperate with the guide portion (13) of said main body (2).

In a 34th aspect according to any one of the preceding aspects from the 28th to the 33rd, the guide portion (13) of said main body comprises a plurality of grooves (19) and optionally a plurality of teeth (20).

In a 35th aspect according to the preceding aspect, the teeth (18) of said guide portion (9) of the selector (6) are inserted in the grooves (19) of the guide portion (13) of the main body.

In a 36th aspect according to any one of the preceding aspects from the 28th to the 31st, the guide portion (13) of said main body comprises a plurality of teeth (20) inserted in the grooves (17) of the guide portion (9) of the selector (6), imposing a main movement direction of said selector (6) inside said joint (5).

In a 37th aspect according to the preceding aspect, the teeth (20) of the guide portion (13) of the main body (2) impose a main movement direction of said selector (6) inside said joint (5) along or parallel to said/a rotation axis (X) of said work head (4) relative to said main body (2).

In a 38th aspect according to any one of the preceding aspects, the main body (2) comprises a first and a second half-shell (2a, 2b) couplable with each other.

In a 39th aspect according to the preceding aspect, the first and the second half-shell (2a, 2b) of the main body (2) are engaged with each other to define a first coupling portion (22).

In a 40th aspect according to any one of the preceding aspects, the work head (4) also comprises a respective first and a second half-shell (4a, 4b).

In a 41st aspect according to the preceding aspect, the first and the second half-shell (4a, 4b) of the work head (4) are engaged with each other to define a second coupling portion (21) engaged with the first coupling portion (22) by means of said joint (5).

In a 42nd aspect according to the 39th and the 41st aspect, the joint (5) comprises a pin (23) axially passing through said selector (6) and configured to axially pack, along said/a rotation axis (X), the first and the second coupling portion (22, 21).

In a 43rd aspect according to the 39th and the 41st aspect, the second coupling portion (21) is inserted in the first coupling portion (22).

In a 44th aspect according to any one of the preceding aspects, the device comprises a knob (24) accessible to the operator of said machine, and in which the/an abutment portion (8) of said selector (6) is configured to cooperate with a/the stop element (7).

In a 45th aspect according to the preceding aspect, the stop element (7) is rigidly constrained or integrated with said knob (24) so that following a user action on said knob (24) the stop element (7) can move at least between a locked position and a release position.

In a 46th aspect according to any one of the preceding aspects, the stop element (7) is movable at least between a locked position and a release position, selectively and respectively allowing to:
- lock said selector (6) in said locking configuration of said joint (5), said stop element (7) maintaining said selector (6) in a lowered position in which the selector (6) angularly locks the work head (4) with respect to the main body (2),
- release said selector (6) in said selection configuration of said joint (5), said stop element (7) allowing a movement of said selector (6) in a raised position in which the selector (6) allows the angular movement of said work head (4) with respect to said main body (2).

In a 47th aspect according to any one of the preceding aspects, the stop element (7) has a substantially ring shape and is inserted in said joint (5) in a position adjacent to said selector (6).

In a 48th aspect according to any one of the preceding aspects from the 42nd to the 47th, the pin (23) passes through a central cavity of said stop element (7).

In a 49th aspect according to any one of the preceding aspects, the abutment portion (8) of said selector (6) has an active surface (8a) axially opposite the guide portion (9) and facing a corresponding active surface (7a) of said stop element (7).

In a 50th aspect according to any one of the preceding aspects from the 22nd to the 49th, said at least two protrusions (11) of the abutment portion (8) extend in an axial direction.

In a 51st aspect according to any one of the preceding aspects from the 22nd to the 50th, said at least two protrusions (11) of the abutment portion (8) extend along an outer perimeter of said active surface.

In a 52nd aspect according to any one of the preceding aspects from the 22nd to the 51st, each of said protrusions (11) is laterally delimited by two cavities (12).

In a 53rd aspect according to any one of the preceding aspects from the 49th to the 52nd, each of said protrusions (11), following the perimeter of the active surface (8a), covers a respective arc of circumference and has opposite chamfered circumferential ends (11a) forming a gradual connection with a bottom (12a) of each cavity adjacent to the respective circumferential end of the protrusion.

In a 54th aspect according to any one of the preceding aspects, the stop element (7) comprises a locking portion (25), formed on its active surface (7a) and facing one/the active surface (8a) of one/the abutment portion of the selector (6).

In a 55th aspect according to the preceding aspect, the locking portion (25) comprises at least two teeth (26) optionally extending along the outer perimeter of said active surface (7a) of the stop element (7) and in the axial direction.

In a 56th aspect according to the preceding aspect, the teeth (26) are arranged, depending on the configuration selected for said selector (6), to act in abutment and on said protrusions (11) of the abutment portion of the selector (6) forcing said selector (6) to abut in a/said lowered position in which the selector (6) angularly locks the work head with respect to the main body or to be inserted in the cavities (12) of the abutment portion of the selector (6) allowing the selector (6) to move in a/said raised position in which the selector (6) allows the angular movement of said work head (4) with respect to said main body (2).

In a 57th aspect according to any one of the two preceding aspects, said teeth (26) of the stop element (7) are opposite each other.

In a 58th aspect according to any one of the three preceding aspects, said teeth (26) of the stop element (7) follow the perimeter of the stop element itself defining at least two arcuate-shaped elevations, optionally in the form of an arc of circumference.

In a 59th aspect according to any one of the four preceding aspects, the teeth (26) of the stop element (7) have a chamfered profile.

In a 60th aspect according to any one of the five preceding aspects, opposite side portions of each of said teeth define gradual elevations from a bottom (26a) of the active surface of the stop element.

In a 61st aspect according to any one of the six preceding aspects, each of said teeth (26) is laterally delimited by two cavities (27) intended to receive the protrusions (11) of the abutment portion of the selector (6) when the selector (6) moves to one/said raised position in which the selector (6) allows the angular movement of said work head (4) with respect to said main body (2).

In a 62nd aspect according to any one of the preceding aspects from the 44th to the 61st, said knob (24) comprises an operating element (28) emerging with respect to said work head and to said main body so as to be drivable by the operator.

In a 63rd aspect according to the preceding aspect, the knob (24) comprises a transmission plate (29) torsionally integral with the drive element (28) and the stop element (7).

In a 64th aspect according to the preceding aspect, the transmission plate (29) has a ring shape to allow the insertion of said pin (23).

In a 65th aspect according to any one of the two preceding aspects, the transmission plate (29) comprises recesses (30) for receiving corresponding engagements (31) carried by the stop element (7), said recesses and said engagements being optionally placed peripherally and for example angularly offset by 180°.

In a 66th aspect according to any one of the three preceding aspects, the transmission plate (29) has axial coupling teeth (32) with corresponding counter-teeth (33) of the drive element (28), for example snap-coupling teeth (32) and counter-teeth.

In a 67th aspect according to any one of the four preceding aspects, the transmission plate (29) has shaped surfaces (34) for making a torsional coupling with shaped counter-surfaces (35) of the drive element (28).

In a 68th aspect according to any one of the preceding aspects from the 44th to the 67th, the main body (2) defines a receiving seat (62) of said knob (24), said receiving seat having a bottom wall (43) having at least one slit (44), optionally two opposite slits, each slit receiving a respective engagement (31) of the stop element (7) and terminally defining respective end-stroke abutments (45).

In a 69th aspect according to the preceding aspect, the end-stroke abutments (45) of each slit (44) define a 90° angular stroke for said stop element (7) and in which said knob (24) is consequently movable by a 90° angular stroke.

In a 70th aspect according to any one of the preceding aspects, the joint (5) comprises an elastic sealing element (36) configured to push said selector (6) away from said/a stop element (7), maintaining a mechanical abutment between the gear portion (10) of said selector (6) and the gear portions (14) of said work head (4) or of said main body (2), said mechanical engagement stably maintaining the position of said work head (4) with respect to said main body (2).

In a 71st aspect according to any one of the preceding aspects, the joint (5) comprises an elastic release element (37) configured to push said selector (6) towards said stop element (7), when said selector (6) is in said selection configuration.

In a 72nd aspect according to any one of the two preceding aspects, each of said elastic elements (36, 37) comprises one or more springs or one or more pneumatic pistons.

In a 73rd aspect according to any one of the preceding aspects, the selector (6) and a/the stop element (7) are configured to cooperate so that in said angular locking configuration, said teeth (26) of said stop element (7) abut the abutment portion (8) of said selector (6), said stop element (7) keeping said selector (6) locked in a lowered position, with the gear portion (10) of said selector (6) fully inserted in said gear portion (14) of said work head (4) or of said main body (2).

In a 74th aspect according to any one of the preceding aspects, the selector (6) and a/the stop element (7) are configured to cooperate so that a switching from said angular locking configuration to said selection configuration occurs following the movement, optionally a rotation, of said stop element (7) inside said joint (5) from the locked position to the release position,
said stop element (7) moving inside said joint (5) allowing:
- the movement of said selector (6) which is pushed by said elastic release element (36) to move towards said stop element (7) guided by said guide portion (9), and
- a partial extraction of said gear portion (10) of said selector (6) from said gear portion (14) of said work head (4) or of said main body (2), said elastic sealing element (36) balancing the thrust of said elastic release element (37) and maintaining the partial engagement between said gear portions.

In a 75th aspect according to the preceding aspect, the selector (6) and a stop element (7) are configured to cooperate so that, in said selection configuration, said work head (4) is stably maintained in a same angular position with respect to said main body (2).

In a 76th aspect according to any one of the two preceding aspects, the selector (6) and a/the stop element (7) are configured to cooperate so that, in said selection configuration, said gear portion (10) of said selector (6) partially engages said gear portion (14) of said work head (4) or of said main body (2).

In a 77th aspect according to the preceding aspect, said partial engagement is maintained by said elastic sealing element (36) and by said elastic release element (37) generating elastic forces having an opposite direction with respect to the other.

In a 78th aspect according to any one of the preceding aspects, the work head (4) and said main body (2) have respective main longitudinal extension directions, said work head (4) being configured to be aligned or inclined with respect to said main body (2) depending on the relative angular position assumed by said work head (4) with respect to said main body (2).

In a 79th aspect according to any one of the preceding aspects, the work head (4) is configured to rotate with respect to said main body (2) according to a/said rotation axis (X).

In an 80th aspect according to any one of the two preceding aspects, the rotation axis (X) is transverse to said main longitudinal extension directions of said work head and said main body.

In an 81st aspect according to any one of the preceding aspects, the joint (5) is configured to allow:
- an alignment condition of the work head (4) with respect to the main body (2),
- one or more primary clockwise inclination conditions of the work head relative to the main body with respect to said alignment condition, and
- one or more secondary anti-clockwise inclination conditions of the work head relative to the main body with respect to said alignment condition.

In an 83rd aspect according to any one of the preceding aspects, the machine is powered electrically or by fuel or hybrid.

In an 84th aspect according to any one of the preceding aspects, the machine is an electric machine powered by at least one removable and rechargeable battery (40).

In an 85th aspect according to any one of the preceding aspects, the machine being a hedge trimmer or a brush cutter or a chainsaw or a blower or a lawnmower.

In an 86th aspect according to any one of the preceding aspects, the machine comprises at least one electric motor (46) connected to the tool (5).

In an 87th aspect according to any one of the preceding aspects, the machine comprises a battery housing (39) configured to house at least one/said battery (40) for the power supply of a/said electric motor (46).

In an 88th aspect according to any one of the preceding aspects, the machine extends in length along a main longitudinal extension direction (A), and in which said gripping handle is interposed, according to said main longitudinal extension direction (A), between said motor and said battery housing.

In an 89th aspect according to any one of the preceding aspects, the selector (6) comprises a first and a second body (41, 42) coupled, optionally removably, in which the first body comprises the guide portion (9) and in which the second body comprises the abutment portion (8) and the gear portion (10).

In a 90th aspect according to the preceding aspect, the first and the second body (41, 42) each comprise a respective grooved profile (41a, 42a) coupled with the grooved profile of the other of said first and second body.

In a 91st aspect, a method is provided for selecting the angular position of the work head of a machine according to any one of the preceding aspects.

In a 92nd according to the preceding aspect, the method comprises the successive steps of:
- carrying the joint (5) from the angular locking configuration to the angular selection configuration,
- changing the angular position of the work head (4) with respect to the main body (2), maintaining a grip on the main body of the machine and applying a force on said work head until the desired angular position is reached,
- returning the joint (5) from the angular selection configuration to the angular locking configuration.

In a 93rd aspect according to the preceding aspect, the step of changing the angular position of the work head (4) with respect to the main body (2) when the selector is in a selection configuration:
- said work head (4) changes angular position with respect to said main body (2) following an action of an operator user of said machine who applies a force to said head, causing the establishment of a torque in said joint which exceeds said moment;
- said selector (6) remains angularly integral with said main body (2) to which it is constrained through said guide portion (9),
- said selector (6) moves towards the stop element (7), freeing the space necessary for the rotation of the gear portion (10) so that, as long as said torque remains, said work head can rotate with respect to said main body and said selector, changing relative angular position;
- at the end of the application of said torque, the elastic sealing element (36) pushes away from the stop element (7), said gear portion (10) of said selector (6) partially engaging said gear portion (10) of said work head (4), said selector (6) stably maintaining said work head (4) in a same relative angular position.

In a 94th aspect according to any one of the two preceding aspects, a switching from said selection configuration to said angular locking configuration occurs following the movement of said stop element (7) inside said joint (5) from the release position to the locked position, said movement being for example a rotation, and being caused by an operator user of said machine acting on a/said knob (24) constrained to said stop element (7). In a 95th aspect according to the preceding aspect, said knob (24) is accessible from the outside of said machine to switch the selector from the selection configuration to the angular locking configuration.

In a 96th aspect according to any one of the two preceding aspects, the stop element (7) moving, optionally rotating, inside said joint (5), allows the movement of said selector (6), optionally said locking portion of said stop element (7), abutting the abutment portion of said selector (6).

In a 97th aspect according to any one of the three preceding aspects, said selector (6) moving in said joint pushed by said stop element (7) and guided by said guide portion (9) which cooperates with the guide portion of said main body (2) allows the axial sliding of said selector (6) whereby said gear portion (10) of said selector (6) moves closer to said gear portion (14) of said work head (4) and fully engages said gear portion (14) of said work head (4), said joint (5) thereby switching in said angular locking configuration and rigidly constraining said work head (4) with respect to said main body (2) in a same angular position.

In a 98th aspect, a machine is provided for the maintenance of external areas, optionally a machine for cutting the lawn or for shaving or pruning trees or hedges, said machine (1) comprising:
- a main body (2) accommodating a gripping handle (3) for an operator of said machine,
- a work head (4) constrained to said main body (2),
- a tool (4a) carried by said work head (4), and
- a joint (5) interposed between said main body (2) and said work head (4), said joint (5) being configured to allow an engagement of said work head (4) relative to said main body (2) in a plurality of preset angular positions distinct from each other.

In a 99th aspect according to the preceding aspect, the joint (5) is a flat joint defining, in the angular selection configuration, a rotation axis (X) of said work head (4) relative to said main body (2).

In a 100th aspect according to any one of the two preceding aspects wherein said plurality of angular positions are positions offset from each other in a predetermined manner around one/the rotation axis (X) of said work head (4) relative to said main body (2).

In a 101st aspect according to any one of the three preceding aspects, the adjacent angular positions of said plurality of angular positions are offset from each other by 22.5°.

In a 102nd aspect according to any one of the four preceding aspects, the adjacent angular positions of said plurality of angular positions are offset from each other, defining an inclination angle (α) between a main extension direction defined by the main body (2) and a main longitudinal extension direction defined by the tool (4a).

In a 103th aspect according to the preceding aspect, the inclination angle (α) is configured to assume the following values: 90°, 112.5°,135°, 157.5°,180°, 202.5°.

In a 104h aspect according to any one of the six preceding aspects, the plurality of angular positions comprises at least three, optionally at least six, distinct angular positions.

In a 105th aspect according to any one of the seven preceding aspects, the joint (5) is configured to allow:
- an alignment condition of the work head (4) with respect to the main body (2),
- one or more primary clockwise inclination conditions of the work head relative to the main body with respect to said alignment condition, and
- one or more secondary anti-clockwise inclination conditions of the work head relative to the main body with respect to said alignment condition.

In a 106th aspect according to any one of the eight preceding aspects, the joint (5) comprises a selector (6) configured to assume at least the following two operating configurations:
- an angular locking configuration, in which said selector (6) allows said joint (5) to rigidly constrain said work head (4) and said main body (2) in one of the angular positions of said plurality of angular positions, and
- an angular selection configuration, in which said selector (6) is movable inside said joint (5) allowing said joint (5) to:
   ∘ stably retain said work head (4) in a same angular position with respect to said main body (2) until a moment less than or equal to a nominal moment is applied to said joint (5), and
   ∘ allowing an angular movement of said work head (4) with respect to said main body (2) in one of said angular positions upon exceeding said nominal moment.

In a 107th aspect according to any one of the nine preceding aspects, the joint (5) is in accordance with any one of the preceding aspects from the 9th to the 90th.

### BRIEF DESCRIPTION OF THE DRAWINGS

Some embodiments and aspects of the invention will be described hereinafter with reference to the accompanying drawings, given merely for illustrative, non-limiting purposes in which:
- figure 1 is a side view of a machine according to some aspects of the invention,
- figure 2 is a perspective view showing the coupling area between the main body and the work head of the machine of figure 1;

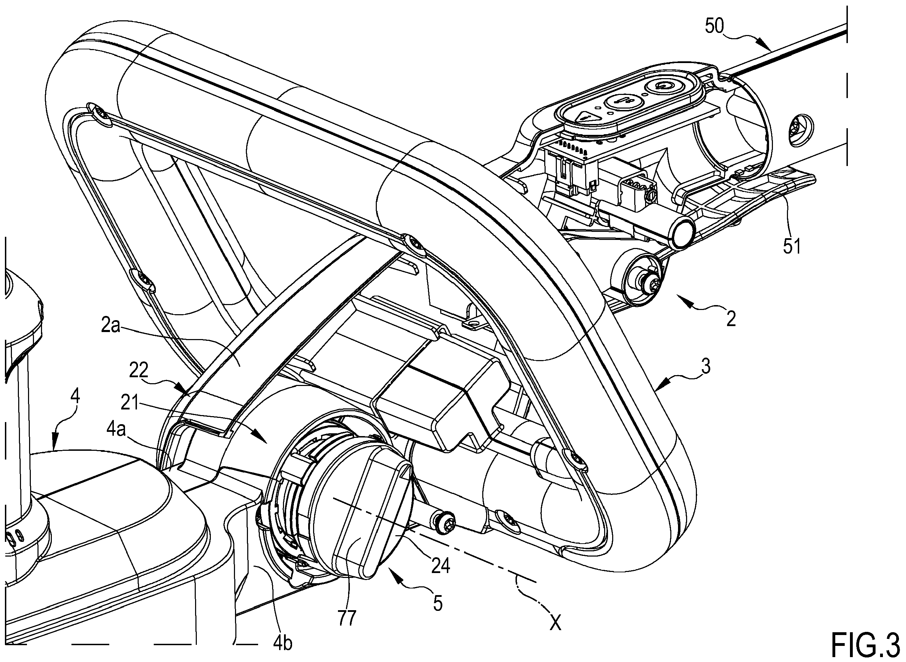

- figure 3 is a perspective view similar to figure 2 in which some external components have been removed to better display the structure of a joint operating between the work head and the main body of the machine of figure 1;
- figures 4 and 5 show in perspective view and according to different angles the joint operating between the work head and the main body of the machine of figure 1;
- figures 6 to 9 show, according to further perspective and partially exploded views, the joint operating between the work head and the main body of the machine of figure 1;
- figures 10 and 10A laterally show the coupling area between the main body and the work head of the machine of figure 1 with an external part of the joint drive knob disengaged from the joint itself;
- figure 11 is a perspective view showing a side opposite that shown in figure 10 of a part forming the knob of the joint referred to in figures 4 to 9;
- figure 12 is a further perspective view showing the coupling area between the main body and the work head of the machine of figure 1 with a half-shell of the work head removed to display the components inside the joint;
- figure 13 is an exploded perspective view showing in particular the inner structure of a half-shell of the work head of the machine of figure 1;

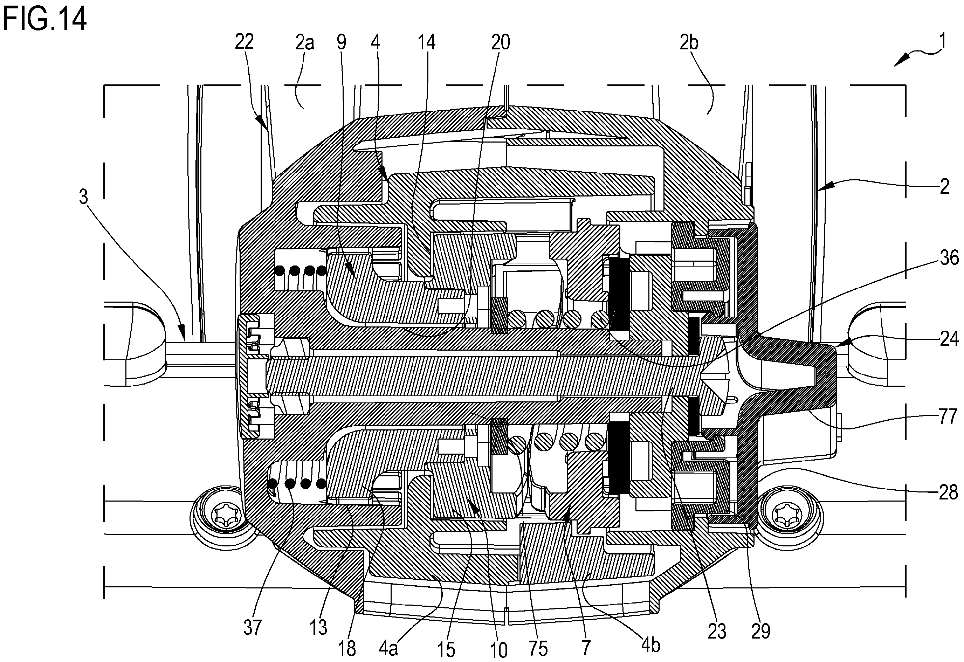

- figure 14 is a section of the joint coupling the main body and the work head of the machine of figure 1; such a section is made according to a plane which axially crosses the joint and shows the joint itself in an angular locking configuration capable of rigidly constraining said work head and said main body to each other;
- figure 15 is a section of the joint of figure 14 according to a section plane crossing the joint and perpendicular to the section plane of figure 14, said joint always being in the angular locking configuration; and
- figure 16 is a section of the joint of figure 14 according to the same sectional plane of the same figure 14; the section of figure 16 instead shows the joint in question in an angular selection configuration in which it is possible to position the work head in various predefined angular positions with respect to the main body.

### DEFINITIONS AND CONVENTIONS

It should be noted that in the present detailed description, corresponding parts illustrated in the various figures are indicated with the same numerical references. The figures could illustrate the object of the present disclosure through non-scale depictions; therefore, the parts and components illustrated in the figures related to the object of the disclosure could exclusively relate to schematic depictions.

### DETAILED DESCRIPTION

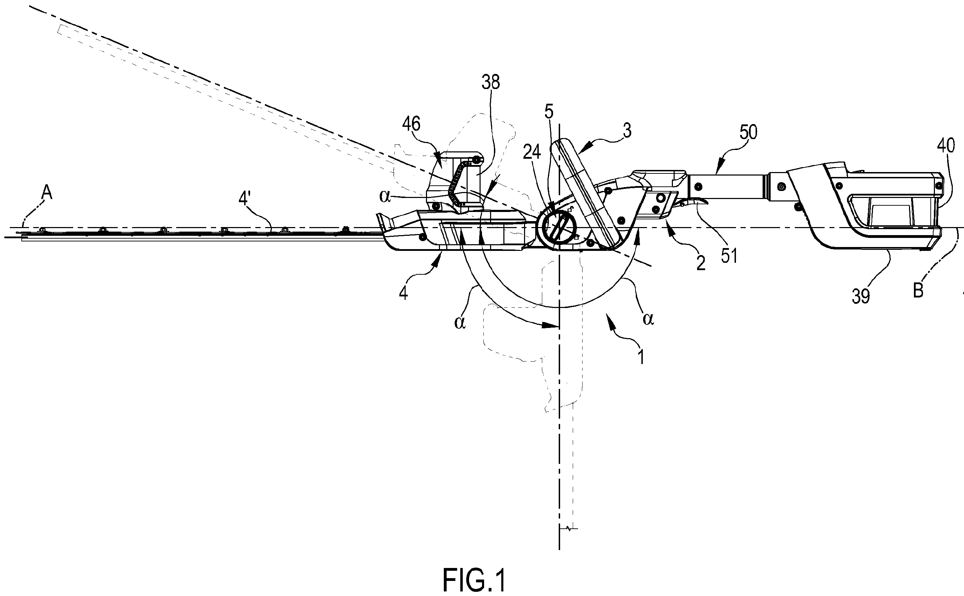

The reference number 1 indicates a machine for the maintenance of external areas, for example for cutting grass, hedges or for pruning trees. The machine comprises a main body 2 having at least one gripping handle 3: in the illustrated example a handle 3 of annularshape is shown, but nothing excludes the presence of handles of different shape. As shown in figure 1, a further handle 50 can also be provided, always on the main body and in a rearward position with respect to the handle 3. In an example, the handle 50 has an external prismatic shape, for example cylindrical, to allow, in cooperation with the handle 3, an operator to grasp the device: the handle 50 can be grasped by an operator with one hand, who grasps the handle 3 with the other hand and then proceeds to carry out maintenance operations in a facilitated manner. The handle 50 can be carried by an end part of the main body 2: in an electrical battery-powered machine, the handle is for example engaged to a battery housing 39 housing a battery 40 for the power supply of electrical or electronic components present on board the machine, such as a motor 46 responsible for the movement of the tool 4'. It should be noted that, alternatively to what has been described, the motor can be an internal combustion engine and the machine lack a battery.

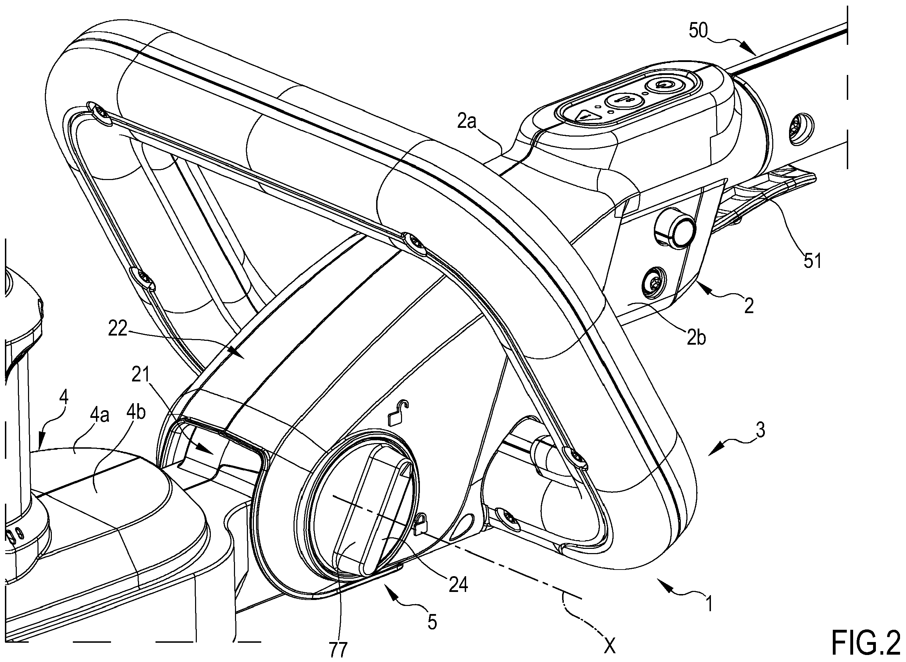

As shown in figure 2, the main body 2 is constrained to a work head 4, after interposing a joint 5. In more detail, the main body can comprise a first and a second half-shell 2a, 2b mutually engageable to define a first coupling portion 22. In an example, the coupling portion 22 is a hollow body, for example fork-shaped, in which a second coupling portion 21 is partially inserted, also formed by a first and a second half-shell 4a and 4b and forming part of the work head 4: the joint 5 operates between the two coupling portions 21 and 22, which will be better described below. The work head 4 carries a tool 4' which is thus located opposite the handle 50; the tool 4' can for example comprise a blade or a saw or other cutting tool to execute land maintenance operations. The tool 4' carried by the work head 4 can for example be configured to execute cutting operations on plants or hedges. In an example, the tool 4' can comprise a toothing made of metal material, for example steel. In the specific case of a hedge trimmer shown in figure 1, the tool 4' can comprise a first and a second blade facing each other and movable with respect to each other.

The machine can also comprise a drive control 51, carried by the main body 2 and configured to control the movement speed of the tool 4' responsible for executing the cutting operations on plants or hedges. The drive control 51 can then be connected, for example by means of a control unit, with the battery 40 to partialize a voltage which can be used to power the motor 46 or to partialize the fuel supply in the event of a combustion engine. In the illustrated example, for balancing reasons, the motor 46 is carried by the work head and is positioned between the tool 4' and the joint 5. In greater detail, the head 4 as already mentioned can comprise the first and second half-shell 4a, 4b, which are engaged together in defining the second coupling portion 21 partially inserted and constrained to the first coupling portion 22 by means of the joint 5 which is detailed below. The first and the second half-shell 4a, 4b, for example, peripherally delimit a compartment of the work head 4 which accommodates the motor 46 and at least in part the joint 5.

The motor 46 can be an electric motor powered by the battery 40 and optionally capable of delivering a nominal power comprised between 50W and 3000W. As already mentioned, the motor can however be a traditional internal combustion engine.

As schematically illustrated in figure 1, the work head 4 carrying the tool 4', can be angularly movable relative to the main body 2, thanks to the joint 5, to angularly offset the tool 4' with respect to the main body itself. In other words, the work head 4 can rotate, with respect to the main body 2, about a rotation axis X, defined by the joint 5 and transverse to the main longitudinal extension direction A of the head 4 and the tool 4' and to the main extension direction B from the main body: the main extension directions A and B are schematically depicted by straight lines in figure 1 and the angle formed by the two directions is indicated with a. In an alignment condition, the tool 4' and consequently the work head 4, can be aligned with the main extension direction B of the main body 2 (forming an angle α of 180°) or, the tool 4' can be angularly offset with respect to the same main extension direction B of the main body 2 (thus forming an angle α less than or greater than 180°). In an example, the work head 4 can be rotatable relative to the main body 2 in one or more primary clockwise inclination conditions (with respect to the alignment condition) and/or in one or more secondary anti-clockwise inclination conditions (always with respect to the alignment condition). In other words, the work head 4 can be movable by rotation both approaching an upper portion of the main body 2 where the operator grasps the gripping handle 3, and approaching a lower portion of the main body 2 opposite the upper portion. It should be noted that the work head 4 is rotatable in the primary and secondary clockwise and anti-clockwise inclination conditions, passing through a plurality of angular positions adjacent to each other offset by 22.5°. In an example, the work head 4 defines an inclination angle α between the main extension direction B of the main body 2 and the main longitudinal extension direction A of the tool 4' having the following values: 90°, 112.5°,135°, 157.5°,180°, 202.5°. In otherwords, not only can the work head be oriented so that the tool 4' passes from an alignment condition to conditions progressively closer to the lower portion of the main body, but also from the opposite side with respect to the alignment condition, as shown in figure 1.

Before describing the joint 5, it is useful to provide some further aspects of parts of the main body and of the head intended to cooperate with the joint 5.

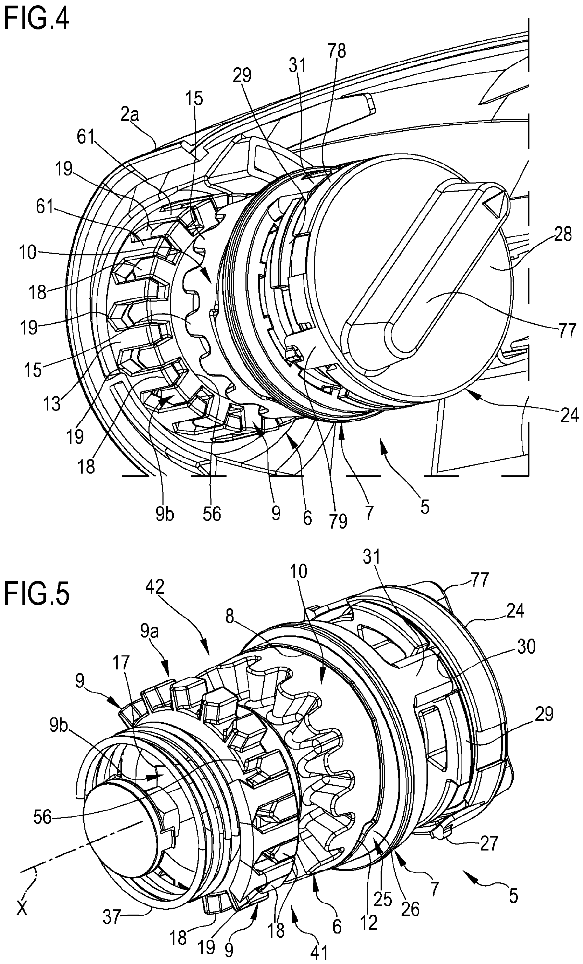

Referring for example to figure 4, the main body 2, for example the half-shell 2a, can comprise a guide portion 13 configured to cooperate with the joint 5. The guide portion 13 can be formed on the second half-shell 2a and comprises a plurality of grooves 19 defined inside the first coupling portion 22 angularly offset and alternated by protrusions 61, each of which is interposed between two respective adjacent grooves 19.

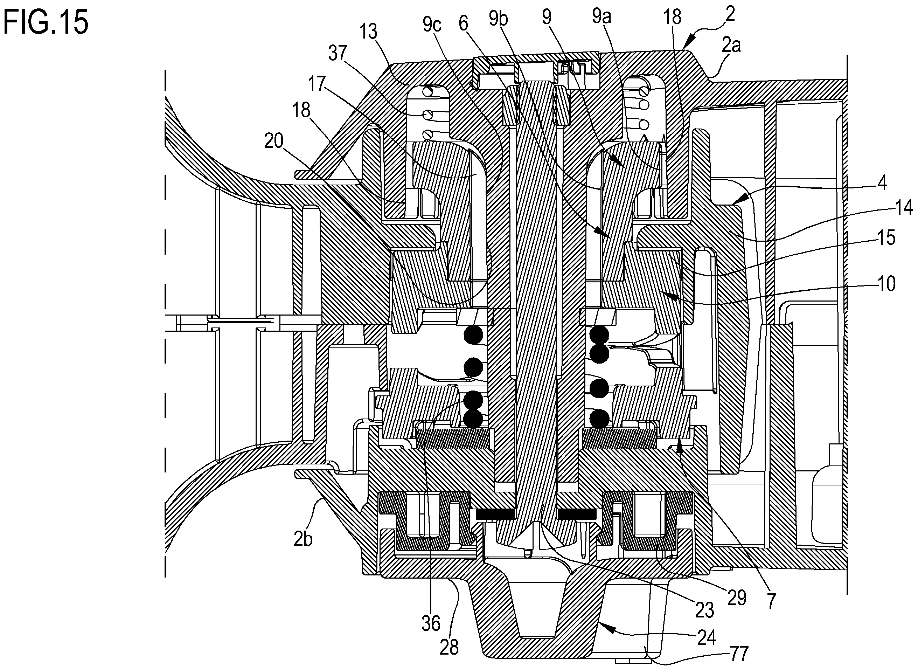

As for example shown in figure 15, the main body 2, optionally the first half-shell 2a, also has an engagement portion 75, radially internal with respect to the guide portion 13 of the main body itself, on which some or all of the components of the joint 5 described below are keyed. In an example, the engagement portion 75 has an elongated hollow body of cylindrical shape, extending axially from the first half-shell 2a of the main body 2, in the direction of the second half-shell 2b of the same main body 2. In an example, the engagement portion 75 can comprise one or more teeth 20 emerging radially outside the internal cavity of the same elongated body, configured to couple with the joint in one or more operating conditions. The engagement portion 75 of the main body 2 can be further coupled with a pin 23, subsequently detailed, and insertable inside the cavity of the elongated body of the engagement portion 75.

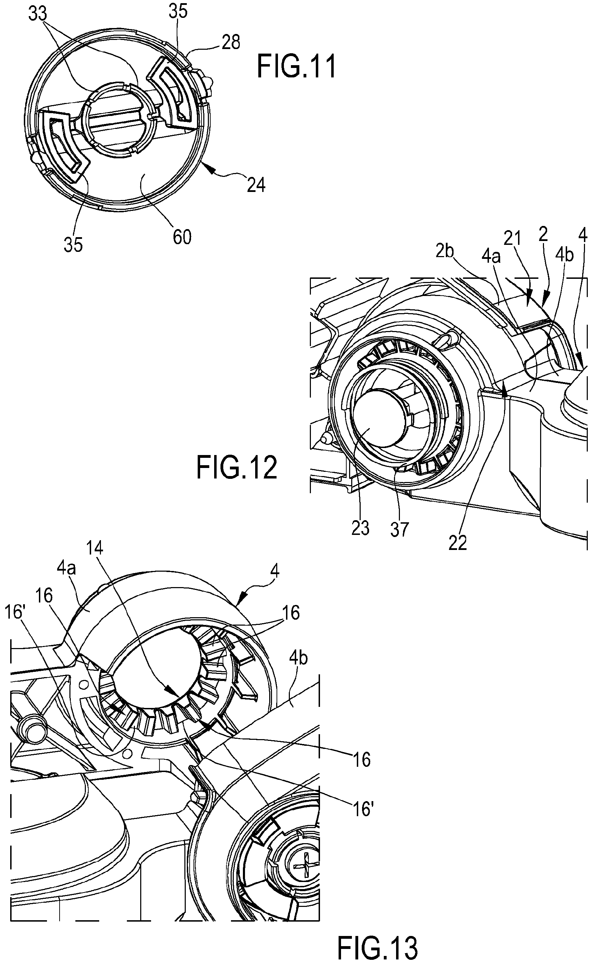

With reference instead to the head 4, each of the first and the second half-shells 4a, 4b of the work head 4 can be keyed onto the engagement portion 75 of the first half-shell 2a of the main body 2. With reference to figure 13, the work head 4 can comprise a gear portion 14 having a plurality of counter-teeth 16 emerging inside the compartment of the same work head 4 and configured to cooperate with the joint 5 as detailed below. The counter-teeth 16 of the work head 4 can be formed on the first half-shell 4a of the work head 4, being angularly offset and spaced apart by grooves 16', each of which is interposed between two respective adjacent counter-teeth 16. It should be noted how each counter-tooth 16 can have a terminally chamfered shape proceeding axially towards the second half-shell 4b. In other words, each counter-tooth 16 is laterally delimited by opposite converging flanks and joined by a connecting portion, for example with a rounded profile, facing the second half-shell 4b of the work head 4.

Turning now to describe the joint 5, this is, as previously mentioned, interposed between the work head 4 and the main body 2 to adjust and control the relative rotation between said bodies. The joint 5 can be housed inside the first and second coupling portion 22, 21, cooperating with each other between the main body 2 and the work head 4 to allow an engagement of the work head 4 relative to the same main body 2 in the plurality of prefixed angular positions.

In an example, the joint 5 can comprise a selector 6 configurable between an angular locking configuration, in which it rotationally constrains the work head 4 to the main body 2 and an angular selection condition in which it allows the rotation of the work head 4 relative to the main body in the plurality of angular positions previously introduced. In an example, the selector 6 is axially movable inside said joint 5 according to an axial movement direction, parallel or coincident with the rotation axis X of the work head 4 relative to said main body 2. The selector 6 can for example move to and from inside the joint 5 between the angular locking configuration and the selection configuration. In detail, the selector 6 can be movable in approaching/distancing with respect to a bottom of the guide portion 13 defined on the main body 2 and with respect to the gear portion 14 of the work head 4. It should be noted how in the present description reference is made to the illustrated example in which the guide portion 13 is rigidly carried by the main body 2, while the gear portion 14 is integral with the work head 4: it is however possible to obtain the coupling between the various components in a different manner and to have the guide portion 13 carried by the head 4 and the gear portion 14 carried by the main body 2 since what is detected is the presence of the selector 6 capable of interacting with both a part integral with the head 4 and a part integral with the main body 2 so as to selectively obtain the engagement configurations described herein.

Returning to the disclosure of the selector 6, in the angular locking configuration, the selector 6 can cooperate with the guide portion 13 of the main body and with the gear portion 14 of the work head 4 to prevent any relative movement between the same work head and the main body. Vice versa, in the angular selection configuration, while remaining engaged with the guide portion 13 of the body 2, the selector 6 is axially spaced with respect to the bottom of the same guide portion 13 of the main body 2. In the selection configuration, the selector 6 partially disengages, as described in more detail below, the gear portion 14 of the work head 4, thus allowing the relative movement between the work head 4 and the main body 2.

With reference to figures 4 to 9, it should be noted that the selector 6 can be made in a first and a second body 41, 42, so as to facilitate the assembly thereof; in fact, the selector 6 is fitted on the engagement portion 75 of the first half-shell 2a of the main body with the gear portion 14 of the work head which in practice is interposed between two parts of the selector. The two bodies 41, 42 of the selector 6 are in any case rigidly joined to form, in use, a single body. In more detail, in the example shown, the bodies 41 and 42 are axially constrained to each other, for example by means of the use of screws 54 or mechanical connectors of another type.

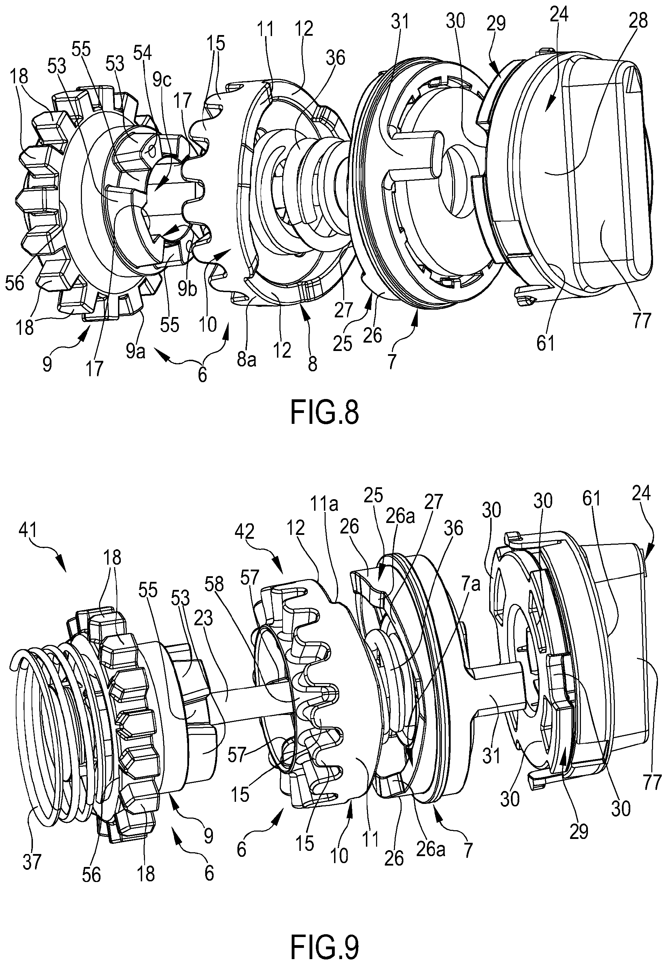

As shown in figure 8, the first body 41 of the selector 6 can also comprise one or more protrusions 53 and one or more corresponding recesses 55 which separate adjacent protrusions 53 to torsionally constrain the same first body with the second body of the selector 6, provided for this purpose with loops interspersed with reliefs 57 emerging from a base wall 58.

The selector, for example at the first body 41, comprises a respective guide portion 9 torsionally coupled to, and in practice rigidly connected with, a gear portion 10 of the selector itself; the gear portion 10 of the selector 6, in the example described herein, is defined on the second body 42 of the selector itself.

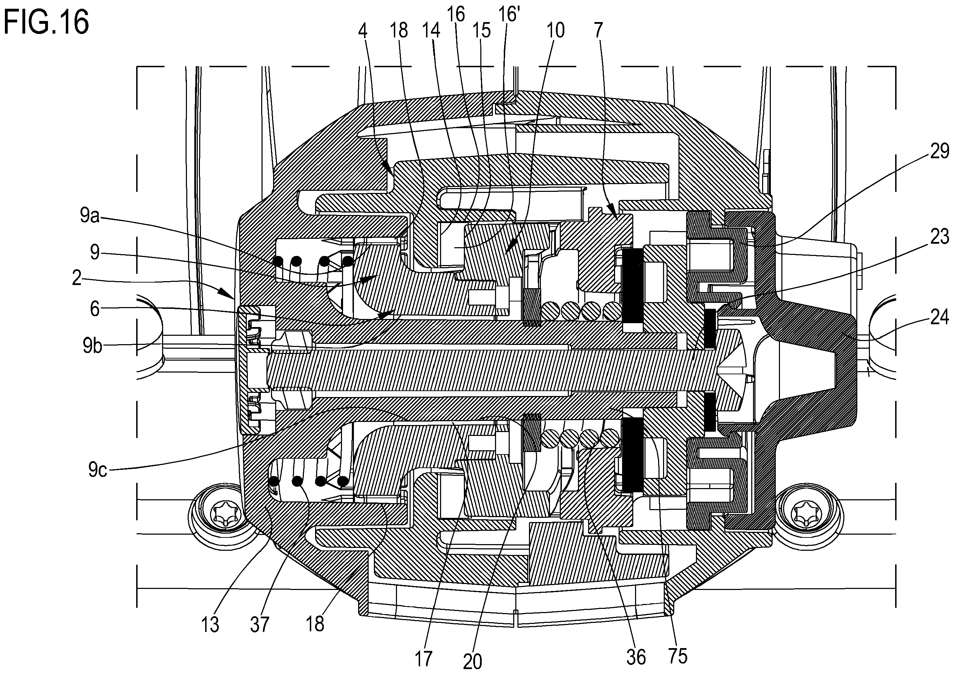

The guide portion 9 of the selector 6 can comprise a radially outer part 9a cooperating with the main body 2. In an example, the radially outer part 9a of the guide portion 9 of the selector 6 has a plurality of teeth 18 radially emerging from a base surface 56 of the guide portion itself, to cooperate with the guide portion 13 of the main body 2. Such teeth 18 are angularly offset from each other and insertable inside the above-described respective grooves 19 of the guide portion 13 of the main body 2, thus preventing a relative rotation between the selector 6 and the main body 2, while allowing a certain degree of relative axial sliding. It should be noted how the teeth 18 of the guide portion 9 of the selector 6 are, both in the unlocking configuration and in the selection configuration of the selector 6, always at least in part inside respective grooves 19 of the guide portion 13 of the main body 2. In other words, despite the axial movement of the selector 6, parallel to the rotation axis X, from the locking configuration to the selection configuration, the teeth 18 of the guide portion 9 of the selector 6 are completely or partially inserted in the grooves 19 of the guide portion 13 of the main body 2, so that the selector is always guided axially. Referring to figure 15 depicting a section of the joint 5 transversely to a main longitudinal extension direction A of the tool 4', the teeth 18 of the guide portion 9 of the selector 6 are depicted fully inserted in the respective grooves 19 of the guide portion 13 of the main body 2. Figure 15 therefore depicts the locking configuration, while the angular selection configuration of the joint 5 is shown in figure 16, in which the teeth 18 of the guide portion 9 are partly axially extracted from the respective grooves 19, thus remaining torsionally coupled to the guide portion 13 of the main body 2. Summing up, in the transition from the locked to the selection configuration the teeth 18 are always guided axially by the grooves 19 and simply move from a lowered to a raised position.

It should further be noted how the radially inner part 9b of the guide portion 9 of the selector 6 can optionally comprise at least one groove 17, extending axially along the axis X and configured to receive the teeth 20 of the engagement portion 75 of the main body 2 to form an additional torsional coupling and impose, as teeth 18 and grooves 19, a main movement direction of the selector 6 inside the joint 5 along the direction of the axis X.

Turning now to describe the gear portion 10 of the selector 6, this cooperates with the work head 4 to selectively allow and block the movement of the same work head 4 relative to the joint itself. From the structural point of view, the gear portion 10 of the selector 6 is, as mentioned above, can be made on the second body 42 and is axially and torsionally engaged to the guide portion 9, thus being integral with the same guide portion 9 during the movement of the selector between the locking configuration and the selection configuration. Still referring to figures 4-9, the gear portion 10 can also comprise a plurality of teeth 15 radially emerging from a base wall 58 away from the rotation axis X and optionally on the side opposite the reliefs 57. In an example the teeth 15 are angularly offset from each other and at least partly counter-shaped to the counter-teeth 16 carried by the gear portion 14 of the work head 4. As for example shown in figures 15 and 16, a part integral with the work head, for example the first half-shell 4a of the work head 4, is inserted between the gear portion 10 of the selector 6 and the guide portion 9 thereof. Each tooth 15 of the gear portion 10 of the selector 6 can have a terminally chamfered shape proceeding towards the first half-shell 4a of the work head 4. In other words, each tooth 15 can be laterally delimited by flanks opposite each other and joined by a connecting portion with a rounded profile facing the counter-reliefs 16 of the gear portion 14 of the work head 4. In an example, the flanks of each tooth 15 of the gear portion 10 of the selector 6 can be converged, proceeding towards the first half-shell 4a of the work head 4. It should therefore be noted how the teeth 15 of the gear portion 10 of the selector 6 are, in the locking configuration of the selector itself, completely inserted inside the grooves 16' defined between the counter-reliefs 16 formed on the gear portion 14 of the work head (figure 15). In such a configuration, the gear portion 10 of the selector 6 cooperates with the counter-teeth 16 of the gear portion 14 of the work head 4, preventing the rotation thereof relative to the main body 2. Vice versa, in the angular selection configuration, the teeth 15 of the gear portion 10 of the selector 6 are only partially extracted from the grooves 16' of the gear portion 14 of the work head 4. The complete extraction of the teeth 15 of the gear portion 10 of the selector 6 from the grooves 16' of the gear portion 14 of the work head 4, occurs following the angular movement of the same work head when carried out by a user. In an example, following the angular rotation of the tool 4', the counter-teeth 16 of the gear portion 14 of the work head 4 axially move the gear portion 10 (and consequently the guide portion 9 of the selector 6) in extraction from the grooves 16' of the gear portion 14 of the work head 4 to allow the same rotation of the work head with respect to the main body 2.

The joint 5 can also comprise elastic components acting at respective ends of the selector 6. In an example, the joint 5 can comprise an elastic release element 37, for example a spring or a pneumatic piston, interposed between the guide portion 9 and the first half-shell 2a of the main body 2, configured to push the selector 6 axially. The elastic release element provides, when the selector is in the release configuration, to axially move the selector itself away from a bottom of the first half-shell 2a of the main body 2, consequently favouring a partial disengagement of the gear portion 10 of the selector 6 from the gear portion 14 of the work head 4. On the side opposite the elastic release element 37, the joint 5 can also have an elastic sealing element 36, for example a spring or a pneumatic piston, interposed between the gear portion 10 of the selector 6 and a stop element 7, the latter adjacent to the same gear portion 10 of the selector 6 on the side opposite the guide portion 9. The elastic sealing element 36 can be configured to counteract, in the release configuration of the selector 6, the movement of the selector itself due to the effect of the elastic release element 37. In an example, the elastic sealing element 36 can have a lower elastic constant with respect to an elastic constant of the release element 37.

It should be noted how the elastic sealing element 36 and the elastic release element 37 allow, in the release configuration of the selector 6, to still keep the work head 4 stably locked with respect to the main body 2 until the operator rotates the same work head 4 by applying a sufficiently high torque between the two parts. As mentioned above, the elastic sealing element 36 has, for example, a lower elastic constant with respect to the release element 37, allowing the axial movement of the teeth 18 of the guide portion 9 of the selector in respective grooves 19 and the partial extraction of the teeth 15 of the gear portion 10 of the selector itself from the grooves 16' of the gear portion 14 present on the first half-shell 4a of the work head 4. The teeth 15 of the gear portion 10, in the angular selection configuration, are completely extractable from the grooves 16' of the gear portion 14 of the work head 4 only when the operator imposes a sufficient force and rotates the same work head with respect to the main body 2 overcoming the resistance opposed by the selector 6. The elastic sealing element 36 balances the thrust of the elastic release element 37, maintaining the partial engagement between the gear portion 14 of the work head 4 and the gear portion 10 of the selector 6, in the absence of external forces additional to the proper weight of the work head 4 and body 2. However, if the operator applies a torque on the work head which is greater than a nominal angular moment with respect to the axis X of the joint 5 (nominal moment which is for example higher than that generated by the weight force of the work head 4 in a rest condition of the machine held by an operator grasping the body 2), the counter-teeth 16 of the gear portion 14 of the work head 4 push the teeth 15 of the gear portion 10 outside the respective grooves 16' formed on the work head, allowing the rotation of the same work head 4. The teeth 15 of the gear portion 10 of the selector 6, once extracted from a respective groove 16' of the gear portion 14 of the work head 4, slide on the counter-teeth 16 of the same work head 4, to then be pushed again by the sealing element 36 in a groove 16' angularly adjacent to the gear portion 14 of the work head 4. Proceeding as described, the operator rotates the work head 4 by an angular portion staggered by 22.5° from the preceding angular position. Obviously, the operation can be such that several successive grooves 16' are bypassed, obtaining a greater overall rotation.

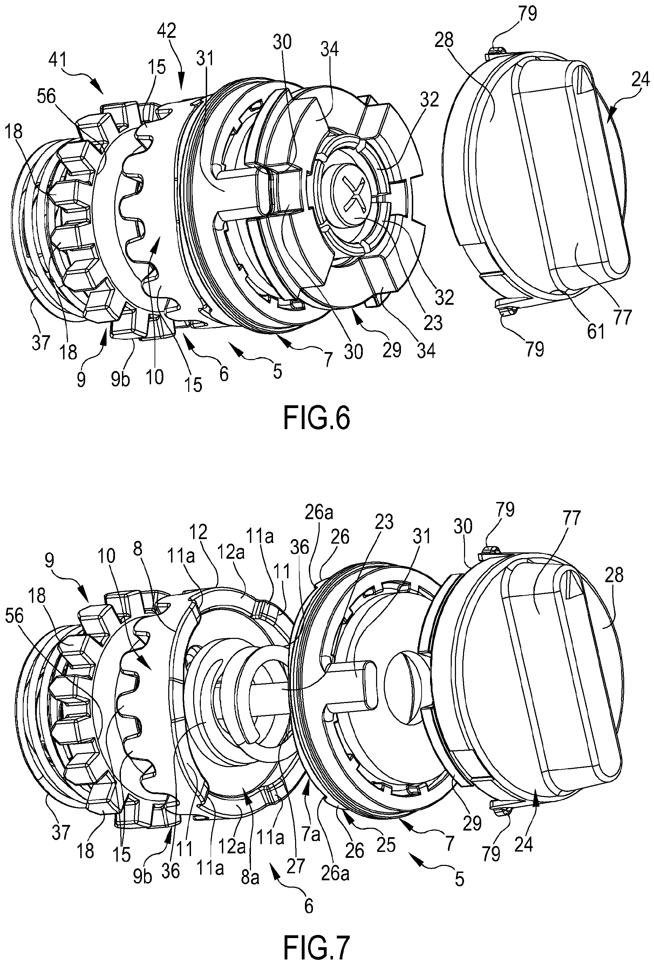

In order to selectively allow or prohibit the axial movement described above, the gear portion of the selector 6 can also comprise, on the side opposite the teeth 15 with respect to the rotation axis X, an abutment portion 8 optionally annular in shape, configured to cooperate with a stop element 7. As for example shown in figure 7, the abutment portion 8 can have at least two protrusions 11 angularly offset from each other by respective cavities 12. The abutment portion 8 of the selector 6 has an active surface 8a axially opposite the guide portion 9, from which the protrusions 11 emerge. In an example, each of the protrusions 11 extends along at least part of a perimeter of the active surface 8a covering an arc of circumference. Each protrusion can also have opposite circumferential ends 11a, gradually connected with a bottom 12a which axially delimits a cavity 12 adjacent to the respective circumferential ends of the protrusion.

As mentioned, the joint 5 can comprise a stop element 7 drivable to move the selector 6 from the angular locking configuration to the angular selection configuration. In an example, the stop element 7 can move at least between a locked position in which it maintains the selector in the locked position and a release position in which it allows the angular movement of the work head with respect to the main body 2 allowing, as will be seen, the axial movement of the selector thanks to the particular shape of the stop element which, depending on its angular position, offers or does not offer the possibility for the selector to move axially in the angular selection configuration. In an example, the stop element 7, in the locked position, imposes the engagement of the teeth 18 of the guide portion 9 at the bottom of the grooves 19 of the guide portion 13 of the main body 2, as well as allowing the engagement of the teeth 15 of the gear portion 10 of the selector 6 with the counter-teeth 16 formed on the gear portion 14 of the work head 4. The locking element 7, in the release position, allows the selector 6 to move parallel to the rotation axis X, carrying out the axial movement of the teeth 18 of the guide portion 9 in the grooves 19 of the guide portion 13 of the main body 2, as well as the partial extraction of the teeth 15 of the gear portion 10 of the selector 6 from the counter-teeth 16 of the gear portion 14 of the work head 4.

As for example shown in figures 4, 7 and 9, the stop element 7 can have an annular shape having a central cavity which allows the same stop element 7 to be able to be keyed on the engagement portion 75 of the first half-shell 2a of the main body 2. In an example, the stop element 7 can have an active surface 7a, facing the active surface 8a of the abutment portion 8 of the selector 6. The stop element 7 can therefore be adjacent to the gear portion 10 of the selector 6. The stop element 7 can also comprise a locking portion 25 defined on the active surface 7a for interacting with the active surface 8a of the selector 6. In detail, the locking portion 25 can comprise at least two teeth 26, angularly offset from each other and extending in the axial direction for at least part of an outer perimeter of the active surface 7a. The teeth 26 of the stop element 7 can be opposite one another and follow the perimeter of the stop element itself, defining at least two arcuate-shaped elevations. Each tooth 26 of the locking portion 25 can also have opposite circumferential ends, gradually connected with a bottom 26a which axially delimits a cavity 27 adjacent to the respective circumferential end of the tooth 26. It should further be noted how the active surface 7a of the stop element 7 can be completely counter-shaped to the active surface 8a formed on the selector 6.

The teeth 26 of the stop element 7 are configured to act in abutment on the protrusions 11 of the abutment portion 8 of the selector 6 or be inserted inside the cavities 12 of the same abutment portion of the selector 6. In fact, the teeth 26 of the stop element 7, in the locking condition, are abutted against the protrusions 11 of the gear portion 10 of the selector 6 eliminating any possibility of axial sliding of the selector 6 in the joint 5. In such a configuration, the stop element 7 axially keeps the selector 6 locked relative to the joint 5 with the complete insertion of the guide portion 9 and the gear portion 10 of the selector, respectively inside the grooves 19 of the guide portion 13 of the main body 2 and inside the grooves 16' of the gear portion 14 of the work head 4. In other words, the movement of the stop element 7 in the locked position entails the consequent movement of the selector 6 in the locking configuration, thus preventing the relative movement between the work head 4 and the main body 2. Vice versa, when the teeth 26 of the stop element 7 are in the release position of the same stop element, they can be housed in the cavities 12 formed on the abutment portion 8 of the gear portion 10 of the selector 6 and the protrusions 22 of the gear portion 10 of the selector 6 can be housed in the cavity 27 of the locking portion 25. In this latter configuration, the stop element 7 allows the axial movement of the selector 6 in the angular selection configuration, allowing the movement of the work head 4 with respect to the main body 2, as disclosed above.

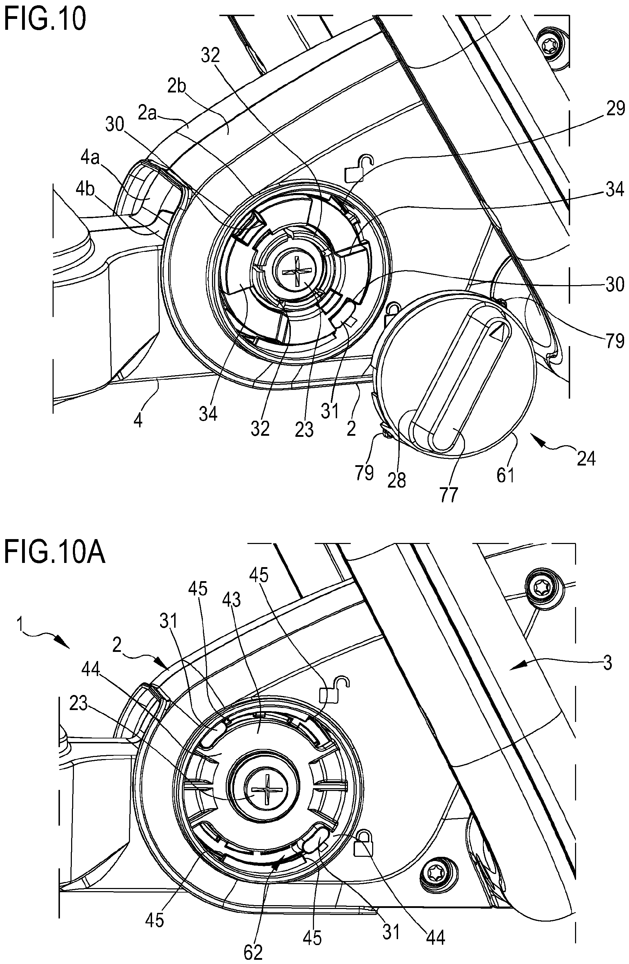

Turning now to disclose how the stop element 7 can be specifically controlled, it is appropriate to make some premises regarding the main body 2 and some components cooperating therewith. In fact, the main body 2 can also comprise a receiving seat 62 defined on the second half-shell 2b of the main body 2, on the side opposite the guide portion 13 of the main body 2. As shown in figure 10A, the receiving seat 62 can be made on an external surface of the main body 2 to receive a knob 24 intended to control the joint 5 and assigned to cooperate with further components of the joint 5, in particular with the stop element 7, in the manner disclosed below. The receiving seat 62 can for example have a bottom wall 43 separating the knob 24 from further components of the joint 5 located inside the main body 2. The receiving seat 62 can also have two or more angularly offset slits 44. The slits 44 can further terminally define respective end-stroke abutments 45, depicted in figure 10A as reliefs which extend starting from a peripheral wall 63 circumferentially surrounding the receiving seat 62, in a radially internal direction of the receiving seat itself. It should be noted that the end-stroke abutments 45 define an angular stroke of the knob 24 which, as will be taken up in the continuation of the disclosure, is limited to 90°.

Referring now to figures 9, 10 and 10A, it is noted that the stop element 7 can comprise two or more engagements 31 opposite the selector 6 and configured to engage the knob 24. The engagements 31 can extend axially away from the active portion 7a of the stop element 7 on the side opposite the teeth 26. In an example, the stop element 7 can comprise two engagements 31 angularly offset from each other and located at respective peripheral areas of the stop element 7. It should be noted that the engagements 31, so as to facilitate the engagement with the knob 24, can have an axial dimension measured parallel to the rotation axis X, greater than a radial dimension measured orthogonally to the rotation axis X. Each engagement 31 faces the bottom wall 43 of the main body 2 and passes through the slits 44 formed on the same bottom wall 43, in order to allow the engagement of the stop element 7 with the knob 24. In an example, each engagement 31 is further insertable inside recesses 30 of a transmission plate 29 of the knob 24 manually drivable by an operator. Thereby, each engagement 31 can contact respective end-stroke abutments 45 formed on the receiving seat 62 of the knob 24. The engagements 31 of the stop element 7 therefore limit the rotation of the entire stop element 7 to a stroke of 90°. Obviously, the extent of the stroke is merely an example.

It should be noted how the stop element 7 is responsible for receiving, by means of the engagements 31, a rotational motion applied by an operator on the knob 24 and converting it, by means of the teeth 26 and in cooperation with the protrusions 11 of the gear portion 10 of the selector 6, into a translational motion for axially moving the selector 6 between the locking configuration and the angular selection configuration.

The joint 5 can further comprise a pin 23 which axially compresses, along the rotation axis X, the first and the second coupling portion 22, 21 and part of the components of the joint (excluding the knob 24 which, as mentioned, is received in the seat 62). In an example, the pin 23 has two end heads which respectively contact the first and the second half-shell 2a, 2b of the main body 2, axially locking the selector 6 to the stop element 7.

As previously mentioned, the joint 5 can comprise a knob 24, housable in the receiving seat 62 of the main body 2 and drivable by an operator to move the stop element 7 between the locked position and the release position and vice versa. For example, the knob 24 can be made in two pieces, mechanically couplable to each other and subsequently engageable with the stop element 7. In an example, the knob 24 can have a drive element 28 accessible by the operator to rotate the joint 5 and the aforementioned transmission plate 29 which torsionally constrains the drive element 28 with the stop element 7.

With reference to figure 10, the transmission plate 29 can be facing the bottom wall 43 of the receiving seat 62 and have two or more recesses 30 for receiving the corresponding engagements 31 carried by the stop element 7. The transmission plate 29 can therefore be torsionally coupled with the engagements 31 which, as specified above, are movable between respective end-stroke abutments 45, thus also limiting the stroke of the knob 24, for example, to a stroke of 90°. In an example, the recesses 30 can be defined on a peripheral edge of the same transmission plate 29 and have an elongated shape having a curvilinear profile, optionally counter-shaped to a peripheral profile of the engagements 31.

The transmission plate 29 can further have two or more teeth 32, extending axially in the direction of the drive element 28 starting from a side surface opposite the bottom wall 43 of the receiving seat 62. The teeth 32 of the transmission plate 29 can be angularly offset, being spaced from each other by respective cavities and configured to couple with the drive element 28. The transmission plate 29 can also comprise two or more shaped surfaces 34 radially outside the teeth 32 and extending axially in the direction of the drive element 28 to couple with the latter. In an example, the shaped surfaces 34 are angularly offset from one another, resulting spaced from respective cavities.

Referring now to figure 11, the drive element 28 can have an inner surface 60 facing the transmission plate 29; counter-teeth 33 are made on the surface 60 which are snap-couplable to the teeth 32 on the transmission plate 29. In an example, the counter-teeth 33 of the drive element 28 can be angularly offset from each other and extend axially in the direction of the transmission plate 29. The counter-teeth 33 can be further counter-shaped to the teeth 32 to make an interlocking coupling with the same teeth 32 of the transmission plate. The drive element 28 can then comprise two or more shaped counter-surfaces 35, defined on the inner surface 60 of the same drive element 28 and configured to couple with the shaped surfaces 34 of the transmission plate 29. In an example, the shaped counter-surfaces 35 can be radially outside the counter-teeth 33 and extend axially in the direction of the transmission plate 29 to couple with the latter. In an example, the shaped counter-surfaces 35 are angularly offset from each other, resulting spaced from respective cavities.

The drive element 28 can also have an outer surface 61 defined on the side opposite the inner surface 60, on which there is a manoeuvring portion 77 configured to facilitate a user in gripping and moving the drive element 28 relative to the main body 2 to achieve the rotation of the stop element 7.

The drive element 28 can further comprise a side wall 78 connecting the outer surface 61 with the inner surface 60 of the same drive element 28, on which there are defined two or more abutment tabs 79 configured to cooperate with recesses formed in the receiving seat 62 to give a user evidence of having positioned the knob 24 in an end-stroke position.

### Method for selecting an angular position of a work head

It is a further object of the present disclosure a method for selecting an angular position of a work head of a machine for the maintenance of external areas in accordance with the foregoing disclosure and/or in accordance with the following claims.

As disclosed, the selector is initially in the angular locking configuration: in this configuration, the stop element keeps the selector 6 axially locked, which therefore has the relative gear portion 10 firmly engaged to the gear portion 14 of the head 4 thus locking the relative rotation between the work head 4 and the main body 2.

In order to angularly orient the work head 4 relative to the main body 2, the method can provide a step of moving the selector of the joint 5 from the angular locking configuration to the angular selection configuration. This step is carried out by rotating the knob 24 which rotates the plate 29 and then brings the stop element 7 from the respective locking condition to the release condition which allows the axial stroke of the selector 6.

The method can then comprise a step of modifying the angular position of the work head 4 with respect to the main body 2, maintaining a grip on the main body 2 itself and applying a force on the work head 4 until the desired angular position is reached. In an example, when the selector 6 is in the selection configuration, the work head 4 is angularly orientable with respect to the main body 2 if the operator applies a torque on the same work head, greater than a nominal moment, which in fact is a function of the actions exerted on the selector by the elastic sealing element 36 and the elastic release element 37.

When the selector is in the angular selection condition, even before the operator applies a torque on the work head 4, the selector6 moves towards the stop element 7 (however not reaching abutment with the latter-figure 16) and frees the axial space necessary for the gear portion 10 of the selector itself to only partially disengage from the gear portion 14 of the work head 4. In this situation the main body and the work head remain coupled in a sufficiently resistant manner since the gear portion 10 and the gear portion 14 cooperate with each other, ensuring (in the absence of additional external forces to the weight of the machine 1) the relative stable angular positioning between head 4 and body 2. In fact, the nominal moment actually generated by the actions exerted by the elastic elements 36, 37 keeps the same work head in equilibrium with respect to the main body (in particular when the operator supports the machine 1 acting by gripping the main body) until an additional action by the operator intervenes.

Subsequently, upon the application of a predetermined torque, the rotation of the head 4 with respect to the main body 2 can however be allowed. In fact, if the operator applies a torque on the work head 4 which is greater than the nominal moment, the counter-teeth 16 of the gear portion 14 of the work head 4 compress the elastic sealing element 36 and push the teeth 15 of the gear portion 10 of the selector 6 outside the grooves 16' of the same work head 4, obtaining the rotation of the work head. It should be noted that the axial extra stroke of the selector 6 is ensured by the stop element which has the cavities 27 and which can therefore house the protrusions 11 of the selector 6 up to the abutment of the latter with the same stop element 7.

If the operator no longer applies any torque on the work head 4, the elastic sealing element 36 extends, pushing away from the stop element 7, the selector 6 returning to the position of figure 16 with the gear portion 10 of the selector 6 which partially engages the gear portion 14 of the work head 4. At this point, an equilibrium condition is again reached in which the selector 6 stably maintains the work head 4 in the same relative angular position.

It should be noted how the movement of the selector 6 from the locking configuration to the angular selection configuration occurs following the movement of the stop element 7 from the respective locked position to the release position. Such movement of the stop element 7 is carried out by an operator who, rotating the knob 24 torsionally constrained to the stop element 7 by means of the transmission plate 29, allows, under the action of the elastic release element 37, the axial movement of the gear portion 10 of the selector 6 in partial disengagement from the gear portion 14 of the work head 4.

On the contrary, if the operator wishes to move the selector 6 from the angular selection configuration to the angular locking configuration, for example after the orientation of the work head in the desired position, the stop element 7 rotates with respect to the gear portion 10 of the selector 6, bringing the teeth 26 in contact with the protrusions 11 of the abutment portion 8 of the selector 6. In doing so, the stop element 7 pushes the selector 6 into compression of the elastic release element 37, fully engaging the gear portion 10 to the gear portion 14 of the work head 4, rigidly constraining the work head 4 with respect to the main body 2 in a prefixed angular position.

## Claims

1. Machine for the maintenance of external areas, optionally a machine for cutting the lawn or for shaving or pruning trees or hedges, said machine (1) comprising:
- a main body (2) accommodating a gripping handle (3) for an operator of said machine,
- a work head (4) constrained to said main body (2),
- a tool (4a) carried by said work head (4), and
- a joint (5) interposed between said main body (2) and said work head (4), said joint (5) being configured to allow an engagement of said work head (4) relative to said main body (2) in a plurality of preset angular positions distinct from each other,
in which said joint (5) comprises a selector (6) configured to assume at least the following two operating configurations:
- an angular locking configuration, in which said selector (6) allows said joint (5) to rigidly constrain said work head (4) and said main body (2) in one of the angular positions of said plurality of angular positions, and
- an angular selection configuration, in which said selector (6) is movable inside said joint (5) allowing said joint (5) to:
∘ stably retain said work head (4) in a same angular position with respect to said main body (2) until a moment less than or equal to a nominal moment is applied to said joint (5), and
∘ allowing an angular movement of said work head (4) with respect to said main body (2) in one of said angular positions upon exceeding said nominal moment.

2. Machine according to the preceding claim, wherein said joint (5) is a flat joint defining, in the angular selection configuration, a rotation axis (X) of said work head (4) relative to said main body (2),
wherein said plurality of angular positions are offset from each other in a predetermined manner about said rotation axis (X),
optionally wherein adjacent angular positions of said plurality of angular positions are offset from each other by 22.5°, for example defining an inclination angle (α) between a main extension direction defined by the main body (2) and a main longitudinal extension direction defined by the tool (4a), said inclination angle (α) being able to assume the following values: 90°, 112.5°,135°,157.5°,180°, 202.5°.

3. Machine according to any one of the preceding claims, wherein said selector (6) in the angular locking configuration is locked inside said joint (5); and optionally wherein said plurality of angular positions comprises at least three, optionally at least six, distinct angular positions,
wherein said joint (5), in the angular selection configuration, is configured to allow a rotation of said work head (4) relative to said main body (2) when said moment applied to the joint (5) is greater than said nominal moment, optionally following a force applied to said work head by an operator of said machine,
wherein said nominal moment is greater than a maximum moment generated in said joint (5) by the weight force of said work head (4) in a machine rest condition in which an operator supports the machine from the main body (2) and said work head is aligned with respect to said main body,
wherein said moment is considered with respect to said/a rotation axis (X) of said work head (4) with respect to said main body (2).

4. Machine according to any one of the preceding claims, wherein said selector (6) has the form of a solid of revolution and has axial symmetry with respect to said/a rotation axis (X) of said work head relative to said main body; said selector (6) internally comprising a cavity (7) extending along an axial extension of said selector (6), coaxially to said rotation axis (X),
wherein said selector (6) is configured to move axially inside said joint (5) according to an axial movement direction parallel to or coincident with said/a rotation axis (X) of said work head (4) relative to said main body (2), said selector (6) being configured to move axially to and from inside said joint (5) concurrently with the switching of said joint (5) from the angular locking configuration to the selection configuration and further, when the joint (5) is in said selection configuration, concurrently with the angular movement of said work head with respect to said main body.

5. Machine according to any one of the preceding claims, wherein the joint (5) comprises a stop element (7) drivable to move said selector (6) from the angular locking configuration to the angular selection configuration,
wherein said selector (6) comprises:
- an abutment portion (8) configured to cooperate with said stop element (7),
- a guide portion (9) configured to cooperate with one among the work head (4) and the main body (2), the guide portion also being configured to constrain the movement of said selector (6) inside said joint (5) according to an axial movement direction, and
- a gear portion (10) cooperating with the other among the work head (4) and the main body (2) and configured for:
∘ locking, inside said joint (5), said work head (4) to said main body (2) when said joint (5) is in the angular locking configuration,
∘ stably retaining said work head (4) and said main body (2) in a same relative angular position when said joint (5) is in the selection configuration, simultaneously allowing an angular movement of said work head (4) with respect to said main body (2) in one of said angular positions, respectively depending on whether or not a moment greater than said nominal torque moment is applied to the joint (5),
wherein:
- said abutment portion (8) has a ring shape, the abutment portion comprising at least two opposite protrusions (11) separated by at least two cavities (12),
- said gear portion (10) extends adjacent to said abutment portion (8) extending axially from said abutment portion,
- said guide portion (9) is axially spaced from the gear portion (10) and engages a corresponding guide portion (13) of the main body or of the work head, said guide portion (9) of the selector (6) in turn having:
∘ a respective radially outer part (9a) extending on an outer surface of the guide portion (9), and/or
∘ a respective radially inner part (9b) delimiting an internal cavity (9c) of the same guide portion of said selector (6).

6. Machine according to the preceding claim, wherein the gear portion (10) of said selector (6) cooperates with a respective gear portion (14) obtained in the main body (2) or in said work head (4), and wherein:
- if the guide portion (9) of the selector (6) engages a guide portion (13) carried by the work head (4), then the gear portion (10) of said selector (6) cooperates with a respective gear portion (14) integral with the main body (2),
- while, if the guide portion (9) engages a guide portion (13) carried by the main body (2), then the gear portion (10) of said selector (6) cooperates with a respective gear portion (14) integral with the work head (4),
wherein the gear portion (10) of said selector (6) comprises a plurality of teeth (15) angularly offset from each other cooperating with a plurality of counter-teeth (16) carried by the gear portion (14) carried by the work head (4) or by the main body (2);
wherein said plurality of teeth and/or said plurality of counter-teeth, optionally both said plurality of teeth (15) and said plurality of counter-teeth (16), has a terminally chamfered and/or rounded shape whereby, when the selector (6) is in the angular selection condition, the teeth (15) can move angularly with respect to the counter-teeth (16) allowing the angular movement of said work head (4) with respect to said main body (2) in one of said angular positions upon exceeding said nominal torque moment.

7. Machine according to any one of the two preceding claims, wherein said guide portion (9) of said selector (6) comprises a plurality of grooves (17) on the respective radially inner part (9b) and a plurality of teeth (18) on the respective radially outer part (9a), wherein said guide portion (9) of said selector (6) is configured to cooperate with the guide portion (13) of said main body (2), and wherein said guide portion (13) of said main body comprises a plurality of grooves (19). and optionally a plurality of teeth (20), the teeth (18) of said guide portion (9) of the selector (6) being inserted in the grooves (19) of the guide portion (13) of the main body and optionally the teeth (20) of the guide portion (13) of the main body (2) being inserted in the grooves (19) of the guide portion (9) of the selector (6), imposing a main movement direction of said selector (6) inside said joint (5), optionally along or parallel to said/a rotation axis (X) said work head (4) relative to said main body (2).

8. Machine according to any one of the preceding claims, wherein said main body (2) comprises a first and a second half-shell (2a, 2b) couplable with each other and wherein the work head (4) further comprises a respective first and a second half-shell (4a, 4b),
said first and second half-shell (2a, 2b) of the main body (2) being engaged with each other to define a first coupling portion (22) and said first and second half-shell (4a, 4b) of the work head (4) being engaged with each other to define a second coupling portion (21) engaged to the first coupling portion (22) by means of said joint (5), and wherein the joint (5) further comprises a pin (23) axially passing through said selector (6) and configured to axially pack, along said/a rotation axis (X), the first and the second coupling portion (22, 21), optionally wherein the second coupling portion (21) inserts in the first coupling portion (22).

9. Machine according to any one of the preceding claims 5 to 8, comprising a knob (24) accessible to the operator of said machine, and wherein said abutment portion (8) of said selector (6) is configured to cooperate with said stop element (7), said stop element (7) being rigidly constrained or integrated with said knob (24) whereby following an action of the user on said knob (24) the stop element (7) can move at least between a locked position and a release position allowing selectively and respectively to:
- lock said selector (6) in said locking configuration of said joint (5), said stop element (7) maintaining said selector (6) in a lowered position in which the selector (6) angularly locks the work head (4) with respect to the main body (2),
- release said selector (6) in said selection configuration of said joint (5), said stop element (7) allowing a movement of said selector (6) in a raised position in which the selector (6) allows the angular movement of said work head (4) with respect to said main body (2),
wherein said stop element (7) has a substantially ring shape and is inserted in said joint (5) in a position adjacent to said selector (6) and further wherein said pin (23) passes through a central cavity of said stop element (7).

10. Machine according to any one of the preceding claims 5 to 9, wherein said abutment portion (8) of said selector (6) has an active surface (8a) axially opposite the guide portion (9) and facing a corresponding active surface (7a) of said stop element (7), wherein said at least two protrusions (11) extend in an axial direction, optionally along an outer perimeter of said active surface, each of said protrusions being laterally delimited by two cavities (12),
wherein each of said protrusions (11), following the perimeter of the active surface (8a), covers a respective arc of circumference and has opposite chamfered circumferential ends (11a) forming a gradual connection with a bottom (12a) of each cavity adjacent to the respective circumferential end of the protrusion.

11. Machine according to any one of the preceding claims when dependent on claim 5, wherein said stop element (7) comprises a locking portion (25), formed on its active surface (7a) and facing the active surface (8a) of the abutment portion (8) of the selector (6), said locking portion (25) comprising at least two teeth (26) optionally extending along the outer perimeter of said active surface (7a) of the stop element (7) and in the axial direction, said teeth (26) being arranged, depending on the configuration selected for said selector (6), to act in abutment and on said protrusions (11) of the abutment portion of the selector (6), forcing said selector (6) to abut in a/said lowered position in which the selector (6) angularly locks the work head with respect to the main body, or to insert in the cavities (12) of the abutment portion of the selector (6), allowing the selector (6) to move in a/said raised position in which the selector (6) allows the angular movement of said work head (4) with respect to said main body (2),
wherein said teeth (26) of the stop element (7) are opposite each other and optionally follow the perimeter of the stop element itself defining at least two arcuate-shaped elevations, optionally in the form of an arc of circumference, said teeth (26) having a chamfered profile, optionally wherein opposite side portions of each of said teeth define gradual elevations from a bottom (26a) of the active surface of the stop element,
further wherein each said tooth (26) is laterally delimited by two cavities (27) intended to receive the protrusions (11) of the abutment portion of the selector (6) when the selector (6) moves to one/said raised position in which the selector (6) allows the angular movement of said work head (4) with respect to said main body (2).

12. Machine according to any one of the preceding claims 9 to 11, wherein said knob (24) comprises a drive element (28) emerging with respect to said work head and to said main body so as to be drivable by the operator and a transmission plate (29) torsionally integral with the drive element (28) and the stop element (7), said transmission plate (29) having a ring shape to allow the insertion of said pin (23) and having:
- recesses (30) for receiving corresponding engagements (31) carried by the stop element (7), said recesses and said engagements being optionally placed peripherally and for example angularly offset by 180°,
- axial coupling teeth (32) with corresponding counter-teeth (33) of the drive element (28), for example snap-coupling teeth (32) and counter-teeth,
- shaped surfaces (34) for making a torsional coupling with shaped counter-surfaces (35) of the drive element (28),
wherein the main body (2) defines a receiving seat (62) of said knob (24), said receiving seat having a bottom wall (43) having at least one slit (44), optionally two opposite slits, each slit receiving a respective engagement (31) of the stop element (7) and terminally defining respective end-stroke abutments (45), optionally wherein said abutments (45) of each slit (44) define an angular stroke of 90° for said stop element (7),
wherein said knob (24) is consequently movable by an angular stroke of 90°.

13. Machine according to any one of the preceding claims 5 to 12, wherein said joint (5) comprises:
- an elastic sealing element (36) configured to push said selector (6) away from said stop element (7), maintaining a mechanical abutment between the gear portion (10) of said selector (6) and the gear portions (14) of said work head (4) or of said main body (2), said mechanical engagement stably maintaining the position of said work head (4) with respect to said main body (2),
- an elastic release element (37) configured to push said selector (6) towards said stop element (7), when
said selector (6) is in said selection configuration,
wherein each of said elastic elements (36, 37) comprises one or more springs or one or more pneumatic pistons; and wherein said selector (6) and said stop element (7) are configured to cooperate so that:
- in said angular locking configuration, said teeth (26) of said stop element (7) abut the abutment portion (8) of said selector (6), said stop element (7) keeping said selector (6) locked in a lowered position, with the gear portion (10) of said selector (6) fully inserted in said gear portion (14) of said work head (4) or of said main body (2).

14. Machine according to any one of the two preceding claims when dependent on claim 5, wherein said selector (6) and said stop element (7) are configured to cooperate so that:
a switching from said angular locking configuration to said selection configuration occurs following the movement, optionally a rotation, of said stop element (7) inside said joint (5) from the locked position to the release position, said stop element (7) moving inside said joint (5) allowing:
- the movement of said selector (6) which is pushed by said elastic release element (36) to move towards said stop element (7) guided by said guide portion (9), and
- a partial extraction of said gear portion (10) of said selector (6) from said gear portion (14) of said work head (4) or of said main body (2), said elastic sealing element (36) balancing the thrust of said elastic release element (37) and maintaining the partial engagement between said gear portions,
wherein said selector (6) and said stop element (7) are configured to cooperate so that, in said selection configuration, said work head (4) is stably maintained in a same angular position with respect to said main body (2), said gear portion (10) of said selector (6) partially engaging said gear portion (14) of said work head (4) or of said main body (2), said partial engagement being maintained by said elastic sealing element (36) and by said elastic release element (37) generating elastic forces having an opposite direction with respect to the other.

15. Machine according to any one of the preceding claims, wherein said work head (4) and said main body (2) have respective main longitudinal extension directions, said work head (4) being configured to be aligned or inclined with respect to said main body (2) according to the relative angular position assumed by said work head (4) with respect to said main body (2); said work head (4) being further configured to rotate with respect to said main body (2) according to a/said rotation axis (X), said rotation axis (X) being transverse to said main longitudinal extension directions of said work head and said main body,
wherein said joint (5) is configured to allow:
- an alignment condition of the work head (4) with respect to the main body (2),
- one or more primary clockwise inclination conditions of said work head with respect to said main body, and
- one or more secondary anti-clockwise inclination conditions of the longitudinal head with respect to the main body;
optionally wherein said machine is an electrical machine powered by at least one removable and rechargeable battery (40), said machine being a hedge trimmer or a brush cutter or a chainsaw or a blower or a lawnmower, even more optionally wherein the machine comprises at least one electric motor (46) operatively connected to the tool (5), a battery housing (39) configured to accommodate at least said battery (40) for the power supply of said electric motor, said machine extending in length along a main longitudinal extension direction (A), and wherein said gripping handle is interposed, according to said main longitudinal extension direction (A), between said motor and said battery housing.
